## Europäisches Patentamt
## European Patent Office
## Office européen des brevets

(19)

(11) Publication number: **0 016 556**
**B1**

(12) **EUROPEAN PATENT SPECIFICATION**

(45) Date of publication of patent specification: **09.02.83**

(51) Int. Cl.³: **B 60 N 1/00, B 60 N 1/06**

(21) Application number: **80300570.1**

(22) Date of filing: **27.02.80**

(54) **Improvements in and relating to suspension seats for vehicles.**

(30) Priority: **12.03.79 GB 7908541**

(43) Date of publication of application:
**01.10.80 Bulletin 80/20**

(45) Publication of the grant of the patent:
**09.02.83 Bulletin 83/6**

(84) Designated Contracting States:
**AT DE NL SE**

(56) References cited:
**DE - C - 887 744**
**US - A - 3 774 963**

(73) Proprietor: **UOP Inc.**
**10 UOP Plaza Algonquin & Mt. Prospect Roads**
**Des Plaines Illinois 60016 (US)**

(72) Inventor: **Barley, Geoffrey Wilfred**
**1195 Tanglewood Court**
**Brookfield Wisconsin 53005 (US)**

(74) Representative: **Taylor, Derek George et al,**
**Mathisen, Macara & Co. Lyon House Lyon Road**
**Harrow, Middx. HA1 2ET (GB)**

Courier Press, Leamington Spa, England.

## Improvements in and relating to suspension seats for vehicles

This invention relates to a suspension seat for a vehicle, and more particularly to a suspension seat having arm-rests for the arms of a seat occupant.

It is known from United States Patent No. 3,774,963 to provide a vehicle seat comprising a seat part, which includes a seat rest pivotally connected to a back rest, a base part, a suspension guiding the back rest for substantially vertical upward and downward movement, a spring for counter-balancing the seat part and seat occupant and an armrest, on at least one side of the seat, located to support the lower arm of a vehicle driver when grasping a steering wheel or other control.

When such a seat is occupied by the driver of the vehicle, his arms will rock as his body is raised or lowered relatively to the steering wheel or other hand controls of the vehicle. If armrests are provided, these should move in such a way that support is given to the driver's arms without detracting from his control of the vehicle. If such armrests are merely fixed to the seat rest or back rest, the required support will not be achieved.

The problem is overcome in accordance with the invention by the provision of a vehicle seat comprising a seat part which includes a back rest and a seat rest, means for mounting the seat rest for tilting movement relative to the back rest, a base part and a suspension means mounting and guiding the back rest for substantially vertical upward and downward movement relative to the base part, the suspension means and the means for mounting the seat rest being operable together to guide the seat rest in said tilting movement relative to the back rest such that at the mid-ride position of the seat part there is no relative movement between the thighs of an occupant for whom the vehicle seat is designed and the seat rest, and such that the occupant's ankles remain fixed at a predetermined point relative to the base part, the suspension means comprising a spring for counterbalancing the seat part and seat occupant, an armrest on at least one side of the vehicle seat, and means mounting fore and aft portions of the armrest for movement relative to the seat rest and the back rest and locating the armrest so as to support, without relative movement, the lower arm of the seat occupant so that his hand can remain stationary at a predetermined position relative to the base part when the seat occupant is grasping a steering wheel or other control, said last named mounting means constraining the said fore and aft portions of the armrest to move pivotally about a pair of horizontal transverse axes, one of said pair of axes being at the instantaneous centre of rotation of the seat occupant's lower arm and the armrest about a first element of the vehicle seat which moves pivotally with respect to the armrest during said upward and downward movement, the other of said pair of axes being located in such a manner that its instantaneous direction of motion is the same as if the said transverse axis moved in an arc about the instantaneous centre of rotation of the occupant's lower arm and the armrest relative to a second element of the vehicle seat which moves pivotally with respect to the armrest during said upward and downward movement.

Such instantaneous centres are determined from the knowledge that the driver's lower arm must be rotated about its point of connection with the hand control, and therefore the armrest must be rotated about this point.

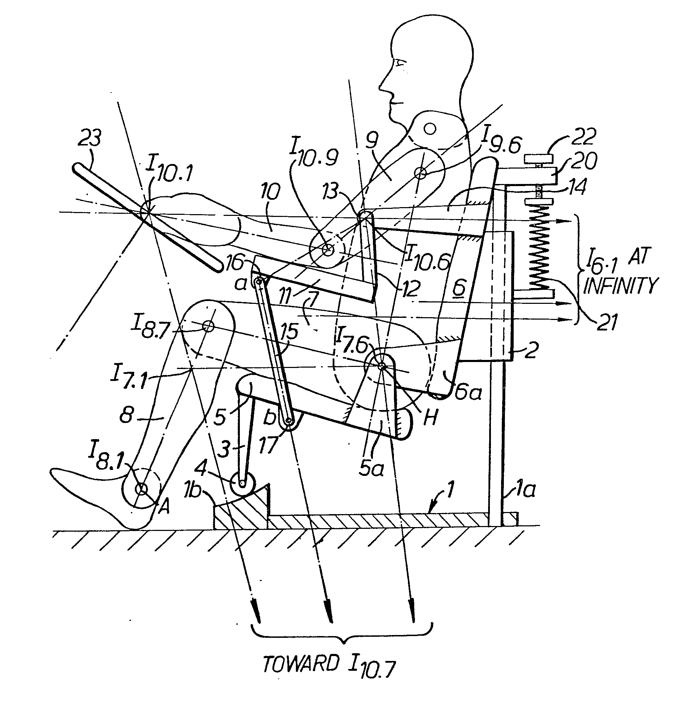

The invention will now be described, by way of example, with reference to the accompanying drawing in which the single Figure shows diagrammatically a side view of a vehicle seat in accordance with the invention, with particular reference to the mounting of the armrest and movement of the armrest relative to other parts of the seat. The other side of the seat corresponds to that shown in the drawing, although the armrest and its supporting structure can be omitted on one side of the seat.

The details of the construction of the seat, apart from the means for supporting the armrest, form no part of the present invention. Attention is directed to our copending European Patent Application Serial No. 15 707, Application No. 80 300 571.9 which contains some disclosure common to the present application and discloses a seat to which the present invention is applicable. In such a seat, the seat rest is supported for movement relatively to the back rest in such a way that the horizontal transverse axis through the driver's ankles remains stationary relative to the base part, the driver's back being held at a substantially constant inclination to the vertical.

It is now necessary to consider the way in which a driver's arm will move in relation to the parts of the seat in order to achieve the objective of the invention. Use will be made in this connection of the Method of Instantaneous Centres of Rotation in considering the movement of the driver's arm relative to the parts of the seat.

It should be borne in mind

1) that the Method of Instanteous Centres of Rotation is based on the concept that any relatively small displacement of a body, movable in a plane, between two positions may be considered as a purely rotational movement about some centre;

2) that the centre of rotation of a first link of a mechanism relative to a second link of the mechanism to which it is pivoted lies at the pivot;

3) that the centre of rotation of a body having linear movement lies at infinity on a line perpendicular to the direction of movement and

4) that if the instantaneous centre of rotation of any part x relative to any part y is defined as the point $I_{xy}$ then if the mechanism has relatively moving parts a, b, c and d, the instantaneous centre $I_{a.d.}$ is at the intersection of the line connecting $I_{a.b.}$ and $I_{b.d.}$ with the line connecting $I_{a.c.}$ and $I_{c.d.}$.

If we now consider the parts of the seat shown in the drawing in relation to the anatomy of the driver, it will be seen that the seat comprises a base part 1 fixed to the floor of the vehicle and from which a column 1a extends upwardly, a frame 2 slidable on the column and supporting a back rest 6 for upward and downward movement at a fixed inclination to the vertical, and a seat rest 5 connected to the back rest 6 for upward and downward movement therewith by pivotally interconnected arms 5a, 6a rigidly connected to the seat rest 5 and back rest 6 respectively. The frame 2 is suspended from a bracket 20, at the top of column 1a, by a tension spring 21 whose tension is adjustable by a suitable screw mechanism 22.

Any suitable means can be provided for supporting the front part of the seat rest, but the support shown in the drawing (which is described in greater detail in my copending European patent application mentioned above) comprises a vertical arm 3 rigidly connected to the seat rest 5 and carrying a roller 4 at its lower end. The roller 4 rests on an arcuate cam surface 1b curved about $I_{7.1}$ such that seat rest 5, during rise and fall of the seat, will move in such a way that the driver's thigh will swing about the horizontal transverse axis through the point $I_{7.1}$ which is the instantaneous centre or rotation of the driver's thigh relative to the base part 1.

The driver's anatomy comprises high thigh or upper leg 7 supported on the seat rest 5, his lower leg 8 supported on the base part 1 (or floor of the vehicle), his torseo, above the hip H, which rests on the back rest 6 and is intended to move up and down therewith, his upper arm 9 and lower arm 10 including the hand.

If the lower arm 10 is to be supported so that the driver's hand is stationary relative to the vehicle hand controls (shown in the drawing as a steering wheel 23) an armrest 11 must be provided which is so mounted as to afford such support. This can be achieved if the lower arm 10 (and thus in practice the armrest) is supported at two Instantaneous Centres of Rotation of the lower arm 10 relative to parts of the suspension seat (including the base part) which moves relatively to one another.

The Instantaneous Centres of Rotation have been indicated in the drawing for various parts of the system but the only instantaneous centres of rotation of the lower arm 10 relative to illustrated parts of the seat are $I_{10.1}$, $I_{10.6}$ and $I_{10.7}$. ($I_{10.7}$ being equivalent to $I_{10.5}$ if one considers that thigh 7 and seat rest 5 move together.

If however the drawing illustrated a different type of suspension, (of which many are described in my copending European patent applications mentioned above) the instantaneous centres of rotation of the lower arm 10 relative to the parts of such suspensions could be illustrated, and each different pair of such centres would provide a pair of pivot points at which the armrest could be supported to achieve the objectives of the invention.

The rearward end of the armrest 11 has an upstanding extension 12 which is provided with a pivotal connection 13 at $I_{10.6}$ to an arm 14 mounted rigidly on the back rest 6 and extending forward to the pivot connection 13. The forward end of the armrest 11 is connected to the seat rest 5 by a link 15 having pivotal connections 16, 17 at its opposite ends to the armrest 11 and to the seat rest 5. This is a practical way of ensuring that the instantaneous direction of motion of point 16 is the same as if point 16 were caused to rotate about $I_{10.7}$.

It will be seen that the point $I_{10.6}$ falls approximately midway between the opposite ends $I_{10.9}$ and $I_{9.6}$ of the seat occupant's upper arm 9.

Although only one way has been described of supporting armrest 11 for movement to maintain the driver's hand substantially at rest during upward and downward movement of the seat, the teaching given above will enable those skilled in the art to readily devise corresponding armrest supporting means to suit the details of the seat suspension being employed, and within the scope of the appended claim.

In one modification of the illustrated embodiment, link 15 is omitted, and in substitution, arm 5a is extended upwardly and to the left to reach point 16 where it is formed with a slot arcuate about point $I_{10.7}$ and of a radius equal to the distance between point 16 and point $I_{10.7}$, and a slider pivoted to the armrest 11 at point 16 slidably engages in this slot. In this way, the front end of the armrest is accurately supported for movement about the point $I_{10.7}$.

**Claim**

1. A vehicle seat comprising a seat part which includes a back rest (6) and a seat rest (5), means (6a, 5a, 3, 4) for mounting the seat rest (5) for tilting movement relative to the back rest (6), a base part (1), and a suspension means (1A, 2) mounting and guiding the back rest (6) for substantially vertical upward and downward movement relative to the base part (1), the suspension means and the means for mounting the seat rest being operable together to guide the seat rest (5) in said tilting movement relative to the backrest (6) such that at the mid-ride position of the seat part (5, 6) there is no relative movement between the thighs of an occupant for whom the vehicle seat is designed and the seat rest (5), and such that the occupant's ankles remain fixed at a predetermined point (A) relative to the base part (1), the suspension means comprising a spring (21) for counterbalancing the seat part (5, 6) and seat occupant, an armrest (11) on at least one side of the vehicle seat, and means (15—17, 12—14) mounting fore and aft portions of the armrest (11) for movement relative to the seat rest (5) and the back rest (6) and locating the armrest so as to support, without relative movement, the lower arm (10) of the seat occupant so that his hand can remain stationary at a predetermined position relative to the base part (1) when the seat occupant is grasping a steering wheel or other control, said last named mounting means (15—17, 12—14) constraining the said fore and aft portions of the armrest (11) to move pivotally about a pair (13, 16) of horizontal transverse axes, one (13) of said pair of axes being at the instantaneous centre ($I_{10.6}$) of rotation of the seat occupant's lower arm (10) and the arm rest (11) about a first element (6) of the vehicle, seat which moves pivotally with respect to the armrest (11) during said upward and downward movement, the other (16) of said pair of axes being located such that its instantaneous direction of motion is the same as if the said transverse axis moved in an arc about the instantaneous centre of rotation ($I_{10.7}$) of the occupant's lower arm (10) and the armrest (11) relative to a second element (5) of the vehicle seat which moves pivotally with respect to the armrest (11) during said upward and downward movement.

## Revendication

Siège de véhicule possédant une partie pour s'asseoir, comprenant un dossier (6) et une assise (5), des moyens (6a, 5a, 3, 4) pour monter l'assise (5) basculante par rapport au dossier (6), une partie de base (1) et un dispositif de suspension (1a, 2) qui supporte et guide le dossier (6) dans ses mouvements sensiblement verticaux de montée et d'abaissement par rapport à la partie de base (1), le dispositif de suspension et les moyens de montage de l'assise coopérant pour guider l'assise (5) dans son basculement par rapport au dossier (6), de manière que, à mi-course de la partie pour s'asseoir (5, 6), il n'y ait pas de mouvement relatif entre les cuisses d'un occupant pour lequel le siège est conçu et l'assise (5), et de manière que les chevilles de l'occupant restent fixes à un point (A) prédéterminé par rapport à la partie de base (1), le dispositif de suspension comprenant un ressort (21) de suspension de la partie pour s'asseoir (5, 6) et de l'occupant, un appuibras (11) sur au moins un côté du siège, ainsi que des moyens (15—17, 12—14) pour monter des portions avant et arrière de l'appuibras (11) mobiles par rapport à l'assise (5) et au dossier (6) et pour positionner l'appui-bras de manière qu'il supporte l'avant-bras (10) de l'occupant du siège sans mouvement relatif, de sorte que sa main peut rester stationnaire à une position prédéterminée par rapport à la partie de base (1) pendant que l'occupant du siège tient un volant de direction ou un autre organe de commande ou de conduite, les moyens de montage (15—17, 12—14) mentionnés en dernier forçant les portions avant et arrière de l'appui-bras (11) d'osciller autour de deux axes transversaux (13, 16) orientés horizontalement, l'un (13) de ces axes se trouvant au centre de rotation instantané ($I_{10.6}$) de l'avant-bras (10) de l'occupant du siège et de l'appui-bras (11) autour d'un premier élément (6) du siège, lequel s'incline par rapport à l'appui-bras (11) pendant lesdits mouvements de montée et d'abaissement, l'autre (16) des deux axes ayant un emplacement tel que sa direction de mouvement instantanée est la même que si cet axes transversal se déplaçait suivant un arc autour du centre de rotation instantané ($I_{10.7}$) de l'avant-bras (10) de l'occupant et de l'appui-bras (11) par rapport à un second élément (5) du siège, qui s'incline par rapport à l'appui-bras (11) pendant lesdits mouvements de montée et d'abaissement.

## Patentanspruch

Fahrzeugsitz mit einer Sitzeinheit, welche eine Rückenlehne (6) und ein Sitzteil (5) aufweist, mit Einrichtungen (6a, 5a, 3, 4) für die relative zur Rückenlehne (6) verschwenkbare Lagerung des Sitzteils (5), einem Basisteil (1), einer die Rückenlehne (6) relative zum Basisteil (1) im wesentlichen senkrecht auf und ab beweglich lagernden und führenden Aufhängung (1A, 2), welche mit der das Sitzteil lagernden Einrichtung zusammenwirkt, um das Sitzteil (5) bei siner Schwenkbewegung relativ zur Rückenlehne (6) derart zu führen, daß in der mittleren Fahrstellung der Sitzeinheit (5, 6) keine Relativbewegung zwischen den Oberschenkeln eines Insassen, für welchen der Fahrzeugsitz konstruiert ist, umd dem Sitzteil (5) auftritt und daß die Fußknöchel des Insassen unverändert in einer vorbestimmten Stellung (A) relative zum Basisteil (1) bleiben, mit einer zur Aufhängung gehörigen Feder (21) für den Gewichtsausgleich der Sitzeinheit (5, 6) und des Insassen, einer Armlehne (11) an wenigstens einer Seite des Fahrzeugsitzes, und mit Einrichtungen (15—17, 12—14) für die relative zum Sitzteil (5) und zur Rückenlehne (6) bewegliche Lagerung der vorderen und hinteren Teile der Armlehne sowie zum Halten der Armlehne in einer Stellung, in welcher sie den Unterarm des Insassen (1) des Sitzes ohne Relativ-bewegung abstützt, so daß seine Hand unbeweglich in einer relative zum Basisteil (1) vorbestimmten Stellung verharren kann, wenn der Insasse des Sitzes ein Lenkrad oder ein anderes Bedienungsteil ergriffen hält, wobei die zuletzt genannten Lagereinrichtungen (15—17, 12—14) die vorderen und hinteren Teile der Armlehne (11) derart führen, daß sie sich in einer Schwenkbewegung um ein Paar waagerechter Querachsen (13, 16) herum bewegen, von denen eine (13) am momentanen Drehmittelpunkt ($I_{10.6}$) des Unterarms (10) des Insassen und der Armlehne (11) um ein bei der Auf- und Abbewegung eine Schwenkbewegung relativ zur Armlehne (11) vollführendes erstes Element (6) des Fahrzeugsitzes liegt und die andere (16) derart angeordnet ist, daß ihre momentane Bewegungsrichtung die Gleiche ist, als wenn sich die genannte Querachse in einem Bogen um den momentanen Drehmittelpunkt ($I_{10.7}$) des Unterarms (10) des Insassen und der Armlehne (11) relativ zu einem bei der Auf- und Abbewegung eine Schwenkbewegung relativ zur Armlehne (11) vollführenden zweiten Element (5) des Fahrzeugsitzes herum bewegt.